# EUROPEAN PATENT SPECIFICATION

(11) **EP 4 232 893 B1**
(45) Date of publication and mention of the grant of the patent: **19.08.2026**
(21) Application number: 20797758.8
(22) Date of filing: 28.10.2020
(51) Int. Cl.: G06F 7/499

(54) **UNBIASED ROUNDING FOR DSP DEVICES**
UNVORGESPANNTE RUNDUNG FÜR DSP-GERÄTE
ARRONDISSEMENT IMPARTIAL POUR DISPOSITIFS DSP

(43) Date of publication of application: 30.08.2023
(73) Proprietor: Huawei Technologies Co., Ltd., Shenzhen, Guangdong 518129 (CN)
(72) Inventor: BUKRIS, Moshe, 80992 Munich (DE); NAVEH, Gil, 80992 Munich (DE)
(74) Representative: Gill Jennings & Every LLP
(86) International application number: PCT/EP2020/080261
(87) International publication number: WO 2022/089736

(56) References cited:
- US-B1- 7 822 799
- XILINX: "Fast Fourier Transform v3.1 - DS260", 11 November 2004 (2004-11-11), pages 1 - 36, XP055817529, Retrieved from the Internet <URL:https://www.eecg.utoronto.ca/~pc/courses/432/2005/projects/midi.pdf> [retrieved on 20210624]
- THOMAS RANDI: "An Architectural Performance Study of the Fast Fourier Transform on Vector IRAM", 1 June 2000 (2000-06-01), XP055816232, Retrieved from the Internet <URL:https://www2.eecs.berkeley.edu/Pubs/TechRpts/2000/CSD-00-1106.pdf> [retrieved on 20210621]
- A: "APPENDIX C IEEE ARITHMETIC - DSP96002 USER'S MANUAL", 1 January 1996 (1996-01-01), XP055816221, Retrieved from the Internet <URL:http://noel.feld.cvut.cz/vyu/scs/motorola/96002/C.PDF> [retrieved on 20210621]
- ANONYMOUS: "Chapter 4. DSP Blocks in Stratix IV Devices; Stratix IV Device Handbook Volume 1", 1 February 2011 (2011-02-01), XP055816183, Retrieved from the Internet <URL:https://www.intel.com/content/dam/www/programmable/us/en/pdfs/literature/hb/stratix-iv/stx4_siv51004.pdf> [retrieved on 20210621]

## Description

### BACKGROUND

Some embodiments relate to digital signal processing processors and, more particularly, but not exclusively, decimation in frequency based fast Fourier transforms in systems that are sensitive to non-white noise spectrum.

Fast Fourier Transform (FFT) is a ubiquitous class of algorithms for the fast implementation of Discrete Fourier Transform, comprising the Cooley Tukey variants, Decimation in Time (DIT) and Decimation in Frequency (DIF). These FFT algorithms can be implemented by software on one or more general-purpose processors, digital signal processing (DSP) devices, and/or on dedicated hardware.

Some DSP devices provide special features to enable cycles-efficient and sufficiently accurate implementation of FFTs. Since those dedicated features require substantial resources such as silicon area and power, and features for both DIT and DIF increase the DSP cost and provide little added value for users, DSP devices may provide feature for either DIT implementations or for DIF implementations.

FiXed Point (FXP) implementation of FFT may introduce a non-negligible quantization noise, and since FFT implementation may comprise many stages, the noise may accumulate along the computations due to the finite word length effects, and become non-negligible. The interim calculations, which comprise additions and multiplications, may require quantization, as a part of down scaling in order to prevent overflow. Once the downscaling is done, truncation or rounding takes place. These truncations may also be referred to as rounding or quantization. Therefore, quantization operations are executed during the FFT calculations. The fewer bits being scaled down at a quantization operation, the more frequently a rounding of exactly half (i.e. round from X.5 to either X or to X+1, for example 3.5 to either 3 or 4) is expected, therefore the disclosure may contribute more to the precision of DIF implementation, however it may also be valuable for DIT implementations.

A stage of FFT may comprise two sub-stages: Butterfly calculation and twiddle factor multiplication. One of the parameters of FFT algorithms is the FFT Radix, the size of each butterfly. In each stage, the number of butterfly calculations instances may equal the length of the signal or segment thereof, being transformed (which may be referred to as FftLength) divided by the radix. Note that some implementations apply padding or time rescaling to match the signal length to FftLength.

Each of those sub stages may introduce round-off effects, also known as quantization noise, that are accumulated and reflected in the FFT output.

One of the common radices being used in FFTs is Radix-4 in which case the butterfly coefficients become +/-1 (or +/-j where j=√(-1)). When the radix is four, the butterfly result can grow maximally by 2 bits (up to 4x), for example, if the inputs are 16 bits numbers, the outputs become 18 bits.

At the next sub-stage, the result may be multiplied by the twiddle factors, which are complex numbers of modulus of 1. Furthermore, the input samples are also complex numbers, therefore the multiplication of the number by a complex number of modulus 1 can cause to growing of the real or imaginary components of the result by up to √2.

Therefore, along the butterfly and the twiddle factor together, the magnitude of the real or imaginary components of the input samples can grow by up to 3 bits.

In order to adjust the outputs to a range of, for example 16 bits, to match the inputs to the next stage, there may be a need to scale down the results of the current stage by up to 3 bits. The scaling down may be done by shifting the butterfly output by up to 3 bit right, removing the k least significant bits wherein k may be 0,1,2, or 3 given a radix of 4.

Simple truncation may introduce a high quantization noise, which may accumulate along the FFT outputs and significantly degrade the FFT accuracy, therefore in most cases rounding takes place.

The rounding operation used in DSPs and many hardware (HW) implementation (named "HW friendly round") may be defined in "C" language terms as (*x*+(1«(*k*-1)))»*k,* i.e. rounds up when the most significant bit being removed is one.

### BRIEF DESCRIPTION OF THE SEVERAL VIEWS OF THE DRAWINGS

Some embodiments are herein described, by way of example only, with reference to the accompanying drawings. With specific reference now to the drawings in detail, it is stressed that the particulars shown are by way of example and for purposes of illustrative discussion of embodiments. In this regard, the description taken with the drawings makes apparent to those skilled in the art how embodiments may be practiced.

In the drawings:
FIG. 1 is an exemplary diagram of typical components of a digital signal processing system, according to some embodiments of the present disclosure;
FIG. 2 is a basic flow chart of an exemplary process for a reduced bias rounding of a number, according to some embodiments of the present disclosure;
FIG. 3A is an exemplary diagram of a discrete fast Fourier transform logic block, according to some embodiments of the present disclosure;
FIG. 3B is an exemplary diagram of a discrete fast Fourier transform stage logic, according to some embodiments of the present disclosure;
FIG. 4 is an exemplary diagram of an adder circuit adapted to some embodiments of the present disclosure;
FIG. 5 is an exemplary diagram of a circuit for a reduced bias rounding of a number, according to some embodiments of the present disclosure;
FIG. 6 is a table of a reduced bias rounding of a number, according to some embodiments of the present disclosure;
FIG. 7A depicts results of simulations of the signal to noise ratio spectrogram, according to some embodiments of the present disclosure; and
FIG. 7B depicts results of simulations of the signal to noise ratio spectrogram, according to some embodiments of the prior art.

### DETAILED DESCRIPTION

It is an object of the present invention to provide a system and a method for reduced bias rounding of a number, using additional bits to determine whether to round the exact half up or down.

The foregoing and other objects are achieved by the features of the independent claims. Further implementation forms are apparent from the dependent claims, the description and the figures.

According to a first aspect of the invention, a device, comprising:
a processing unit adapted for performing a fast Fourier transform of a signal by:
   during an addition sub-stage calculating a butterfly operator result by applying at least one butterfly operator on a portion of the signal; and
   when it is indicated that at least one result of a collocated sub-stage may exceed a following sub-stage input word length, execute an integer scaling and rounding by:
      determining a group of bits to truncate by at least one bit of at least one of the numbers at the collocated sub-stage input;
      setting a flag, based on one additional bit;
      when a most significant bit of the group of bits is one and either the flag or at least one other bits of the group of bits is one, rounding up the butterfly operator result; and
      when either the most significant bit of the group of bits is zero or the flag and the other bits of the group of bits are zero, rounding down the butterfly operator result;
wherein the device further comprises either:
   a five input adder, having four inputs and an additional two-bit-wide input, wherein the value of the additional two-bit-wide input is determined by the size of the group of bits to truncate, wherein the value of the additional two-bit-wide input is one when the group of bits to truncate contains two bits, the value is three when the group of bits to truncate contains three bits, and the value is zero otherwise; or
   a three input adder, having two inputs and an additional one-bit-wide input, wherein the value of the additional one-bit-wide input is determined by the size of the group of bits to truncate, wherein the value of the additional one-bit-wide input is one when the group of bits to truncate contains two bits, and the value is zero otherwise.

According to a second aspect of the invention, a method for performing a fast Fourier transform of a signal by:
during an addition sub-stage calculating a butterfly operator result by applying at least one butterfly operator on a portion of the signal; and
when it is indicated that at least one result of a collocated sub-stage may exceed a following sub-stage input word length, execute an integer scaling and rounding by:
   determining a group of bits to truncate by at least one bit of at least one of the numbers at the collocated sub-stage input;
   setting a flag, based on one additional bit;
   when a most significant bit of the group of bits is one and either the flag or at least one other bits of the group of bits is one, rounding up the butterfly operator result; and
   when either the most significant bit of the group of bits is zero or the flag and the other bits of the group of bits are zero, rounding down the butterfly operator result;
wherein the method further comprises either:
   a five input adder, having four inputs and an additional two-bit-wide input, wherein the value of the additional two-bit-wide input is one when the group of bits to truncate contains two bits, the value is three when the group of bits to truncate contains three bits, and the value is zero otherwise; or
   a three input adder, having two inputs and an additional one-bit-wide input, wherein the value of the additional one-bit-wide input is one when the group of bits to truncate contains two bits, and the value is zero otherwise.

With reference to the first and second aspects, wherein the one additional bit is a single predetermined bit which is the least significant bit not being truncated.

With reference to the first and second aspects, the one additional bit is a single predetermined bit which is the least significant bit beside the group of bits.

With reference to the first and second aspects, the at least one bit comprises the most significant bit.

With reference to the first and second aspects, wherein the integer scaling and rounding is implemented as a processor instruction.

With reference to the first and second aspects, further adapted for decimation in frequency based fast Fourier transform.

Unless otherwise defined, all technical and/or scientific terms used herein have the same meaning as commonly understood by one of ordinary skill in the art to which embodiments. Although methods and materials similar or equivalent to those described herein can be used in the practice or testing of embodiments, exemplary methods and/or materials are described below. In case of conflict, the patent specification, including definitions, will control. In addition, the materials, methods, and examples are illustrative only and are not intended to be necessarily limiting.

Some embodiments relate to digital signal processing processors and, more particularly, but not exclusively, decimation in frequency based fast Fourier transforms in systems that are sensitive to non-white noise spectrum.

This may be obtained by rounding up substantially half of the time, and down otherwise, when the most significant bit being removed is one, and other bits being removed are zero.

The drawback of the known schemes is the fact that the classical round operation bears some bias, which may be reflected at the FFT output, and may accumulate. This bias affects the spectral shape of the quantization noise, a phenomena that cause performance degradations in signal processing applications, including orthogonal frequency division multiplexing (OFDM) modems, statistical machine learning, radar systems, and the like. In some preferred implementations, the quantization noise at the FFT output has a flat power spectrum, i.e. white noise characteristics. The bias incurred by hardware friendly rounding in the DIF FFT case is hereby explained for the example of two-bit right shift: When shifting by two bits to the right, the two bits that will be removed can take one of the following four options: 00, 01, 10, and 11. These bits may represent numerical values of 0, 0.25, 0.5, 0.75 respectively. If we assume the probability for each of the values is equal to 25%, that the expected value (average) of the bias when using the hardware friendly round is 0.125.

The present invention solves the bias effect by introducing a modified, yet simple hardware based rounding capability to the DSP core when performing the FFT butterfly functionality.

The Functionality may be based on a round-to-the-nearest-odd operation within the FFT butterfly instructions. The round-to-nearest-odd operation may round both 0.5 and 1.5 to 1, and similarly both 2.5 and 3.5 to 3. It can be easily seen that the expected value of the error here is zero given the probabilities for each value from 0 to 2, to 4, or to another even value is equal.

Note that the proposed solution affect the result only in cases that the thrown bits are numerically equal to 0.5 (e.g. in scale by 3 bit, they are 100). In all other cases, the result is identical to the hardware-friendly round

Before explaining at least one embodiment in detail, it is to be understood that embodiments are not necessarily limited in its application to the details of construction and the arrangement of the components and/or methods set forth in the following description and/or illustrated in the drawings and/or the Examples. Implementations described herein are capable of other embodiments or of being practiced or carried out in various ways.

Embodiments may be a system, a method, and/or a computer program product. The computer program product may include a computer readable storage medium (or media) having computer readable program instructions thereon for causing a processor to carry out aspects of the embodiments.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of embodiments may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, scripting languages such as Python, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of embodiments.

Aspects of embodiments are described herein with reference to flowchart illustrations and/or block diagrams of methods, apparatus (systems), and computer program products according to embodiments. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

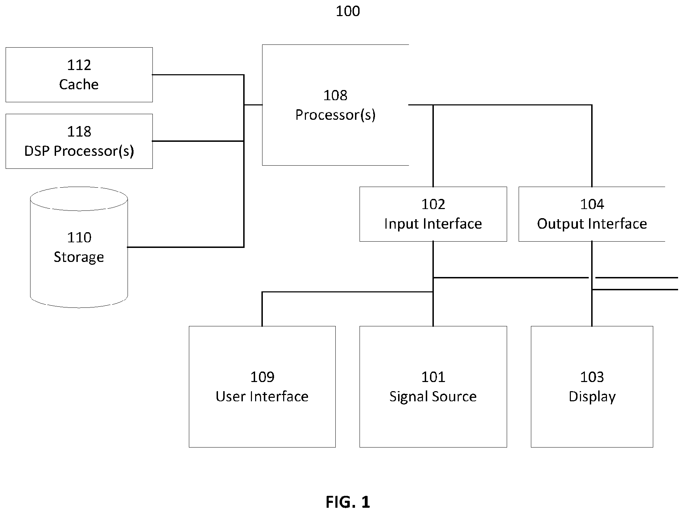

Reference is now made to FIG. 1, which depicts an exemplary diagram of typical components of a digital signal processing system, according to some embodiments of the present disclosure.

As shown in 100, a digital signal processing system may comprise of several computation components. As shown in 102 and 104 respectively, a digital signal processing system may implement input and output interfaces which may be implemented in software, firmware, or dedicated hardware (such as in ASIC or FPGA). The input interface 102 may receive instructions, configuration options and the likes from a user interface as shown in 109, or a remote system, and signals from at least one signal source as depicted in 101. The digital signal processing system shown in 100, which may be responsible for digital signal processing, may use one or more processors, as depicted in 108, DSP processors, as depicted in 118, and/or external storage, as depicted in 110. A Cache as depicted in 112 may be used for storing signals or segments thereof, before, during, and after their processing. The cache may be further used to store instructions, configurations, and the like. The processing may involve the one or more processors, as depicted in 108, however some parts of the processing requires operations such as convolutions and Fourier transforms, for which one or more DSP processors, as depicted in 118 are optimized.

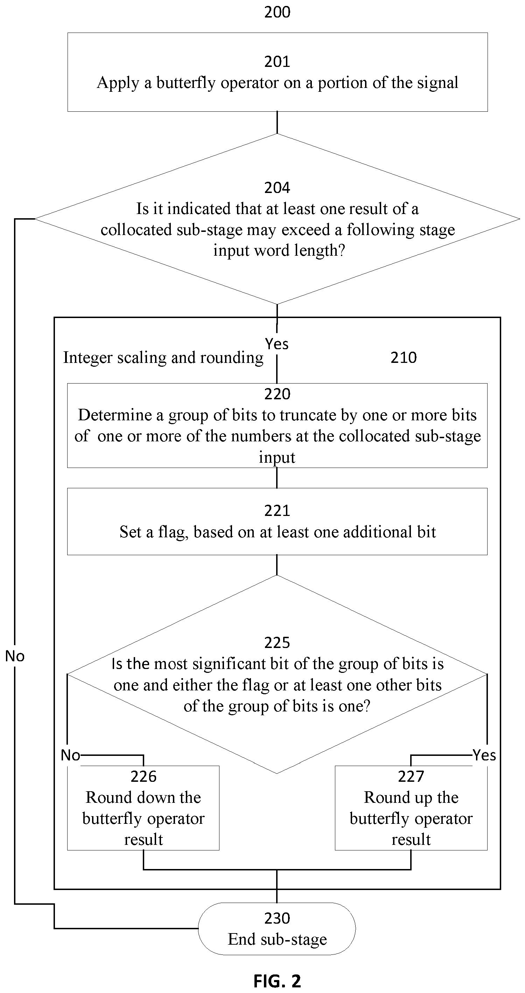

Reference is also made to FIG. 2, which is a basic flow chart of an exemplary process for a reduced bias rounding of a number, according to some embodiments of the present disclosure.

The exemplary process 200 may be executed for rounding numbers at variety of stages of variety of digital signal processing operations, at a variety of levels such as convolutions, Fourier transforms, multiply and accumulate (MAC) and/or the like. The process 200 may be executed by the one or more DSP processors such as 118 shown in FIG. 1. Parts of the process may be executed by firmware routines, some or all parts may be executed using dedicated hardware, and other parts may be executed by hybrid methods such as logic connected to a plurality of firmware or software controlled interfaces. The process may be executed during FFT butterfly calculation, however alternative implementation may execute the process in other sub-stages, in order to provide unbiased input to following stages and/or sub-stages without overflow.

The process 200 may start, as shown in 201 by applying a butterfly operator on a portion of the signal, stored in the cache 112 shown in FIG. 1, the storage 110 shown in FIG. 1, or received through the input interface 102 shown in FIG. 1. The signal may be processed for emphasizing certain frequencies, noise reduction, automatic event detection, and/or the likes. The signal portion may be a segment of the signal adapted to the DSP processor constraints, and may be fixed or vary between the device operation mode, stages, configurations, and/or the like. Radix of four is a ubiquitous example due to the simplicity of the butterfly internal coefficients, which may perform phase shifting, however other radices may be used, and the hardware may support changes the radices between operations. The butterfly operation may be a part of a fast Fourier transform (FFT) of either the Cooley Tukey variants, i.e. Decimation in Time (DIT) and Decimation in Frequency (DIF).

The process 200 may continue, as shown in 204 by querying if it is indicated that at least one result of a collocated sub-stage may exceed a following stage input word length. The indication may be generated by dedicated hardware, or a firmware / software procedure. The indication may query various selections of bits, which may comprise the most significant bits, and other bits of outputs of the sub-stage, and collocated sub-stages. The indication may consider other addition stages, which may relate to other parts of the signal processes and/or nearby stages. These addition stages or sub-stages may be referred to as collocated addition stages or sub-stages, respectively.

The term "collocated" refers to stages or sub-stages for which indications such as that at least one result of a collocated sub-stage may exceed a following stage input word length are generated together. Some implementations may generate the indication by querying a plurality of sub-stage preforming the same operation on different portions of the received signal or interim representations of the received signal, at the same stage. Some implementation may generate the indication by querying preceding and/or following stages or sub-stages used for processing of the same or different portions of the received signal or interim representations of the received signal. Deciding which stages and sub-stages should be considered collocated depends on engineering tradeoffs such as precision versus area, speed, energy consumptions and the like, and may vary between different implementations and configurations. Furthermore, some implementations may calculate the exact number of bits exceeding a following stage input word length, while some other implementations may apply shortcuts and generate an upper bound for number of bits exceeding a following stage input word length, due to considerations such as complexity, area, timing, and the like.

In some implementations, the indication may not be a sufficient condition for at least one result of the collocated addition stages or sub-stages exceeding a next stage bit width, however it may be a necessary condition, guaranteeing that when the indication is off, no integer rounding is required.

The scaling is required to prevent overflow from the following stages, which may account for significant noise and artifacts.

When it is indicated that at least one result of a collocated sub-stage may exceed a following stage input word length the process 200 may continue, as shown in 210 by executing the integer scaling and rounding.

The scaling and rounding 210 may start, as shown in 220 by determining a group of bits to truncate by one or more bits of one or more of the numbers at the collocated sub-stage input.

The group of bits to truncate may be determined by the actual, or estimated, number of overflow bits, indicated by the at least one result of a collocated sub-stage.

The scaling and rounding 210 may continue, as shown in 221 by setting a flag, based on at least one additional bit. The flag may be based on one of the bits, and the at least one additional bit may be a single predetermined bit. For example, the single predetermined bit may be the least significant bit not being truncated, or the least significant bit beside the group of bits. Alternatively, another predetermined bit may be used, however the most significant bits may be more prone to bias as their value may not be evenly distributed between zero and one in some applications. Further alternatively, the flag may be a function of more than one additional, predetermined or dynamically chosen bits.

The scaling and rounding 210 may continue, as shown in 221 by querying if the most significant bit of the group of bits is one and either the flag or at least one other bits of the group of bits is one.

When either the most significant bit of the group of bits is zero or both the flag and the other bits of the group of bits are zero, the scaling and rounding 210 may continue, as shown in 226, by rounding down the butterfly operator result.

When the most significant bit of the group of bits is one and either the flag or at least one other bits of the group of bits is one, the scaling and rounding 210 may continue, as shown in 227, by rounding up the butterfly operator result.

Moreover, subsequently, as shown in 230, the process 200 may continue by ending the sub-stage, and outputting the result to the following stages and/or sub-stages.

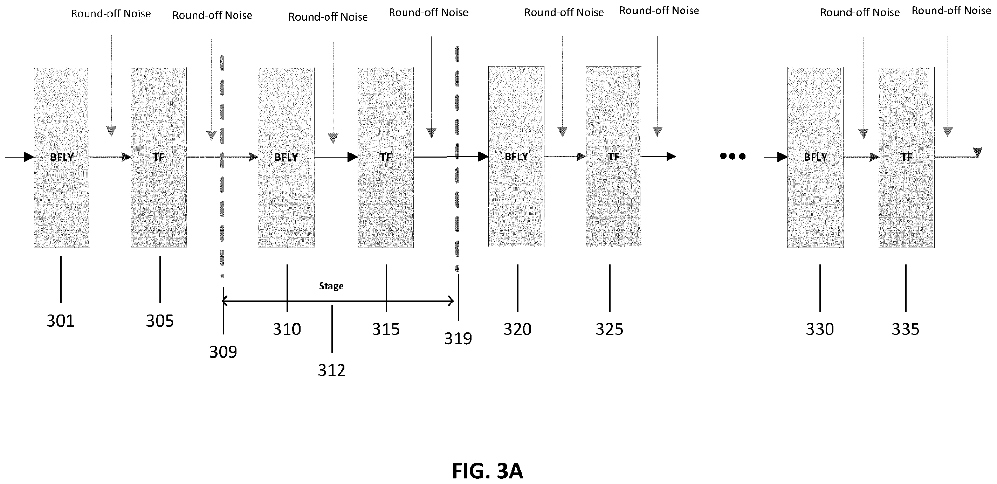

Reference is now made to FIG. 3A which is an exemplary diagram of a discrete fast Fourier transform logic block, according to some embodiments of the present disclosure.

The figure represents an exemplary fast Fourier transform (FFT) schematic partition to butterflies and twiddle factors that may be used for various hardware and software implementations of FFT. Each stage comprises two primary components, the butterfly (BFLY) as shown in 301,310, 320 and 330, and the twiddle factor (TF) as shown in 305, 315, 325 and 335. The stage shown in 312, which may be the second stage, starts at the stage boundary shown in 309 and ends at the stage boundary shown in 319. The BFLY shown in 301 and the TF shown in 305 are of a proceeding stage, which may be the first stage, and the TF shown in 325 and the BFLY shown in 320 are of a following stage, which may be the third stage. Many stages may follow, in some examples one or two stages, and in other examples tens or even hundreds of stages. The TF shown in 335 and the BFLY shown in 330 may be of the last stage, for example the 10^{th} stage. The round off noise may be introduced where the round off is executed. Some implementation may execute round off in the beginning of a sub-stage such the BFLY shown in 310 and the TF show in 315. Some implementation may execute round off in the ending of a sub-stage, or may split the round off between the beginning and the ending of the sub-stage. Some implementations may execute the round off in central round-off locations, within or between the stages, or every other stage. Central round-off locations may require more complex logic. This complexity applies for both executing the round off and generating the indication how many bits to round off, however in central round-off locations have to repeat less often.

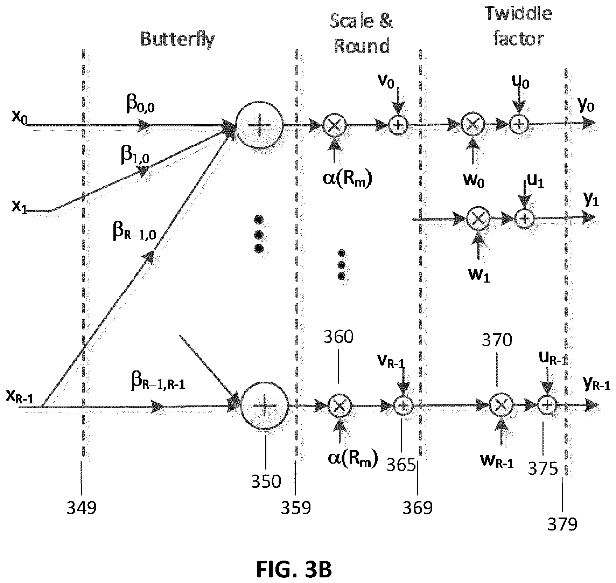

Reference is also made to FIG. 3B which is an exemplary diagram of a discrete fast Fourier transform stage logic, according to some embodiments of the present disclosure.

The figure represents an exemplary butterfly along with the twiddle factors associated with it and the sources for the quantization noise in it (the quantization noises are modeled as the added noises uᵢ and vᵢ). The butterfly may be of any radix R, however 4 and 2 are more ubiquitous than 3,5,6 or 8, which are more ubiquitous than other radices. Thus, more details are provided for the radices 2 and 4, and a person skilled in the art may infer how to apply the present disclosure on other radices. The figure describes a decimation in frequency variant, however the disclosure may be also applied to other variants such as decimation in time.

An exemplary basic theoretical butterfly formula, followed by the twiddle factor multiplication is given below:
In ${y}_{i} = {w}_{i} {\sum }_{m = 0}^{R - 1} {β}_{m} {x}_{m}$ this formula xₘ are the inputs, βₘ are the butterfly internal coefficients, wᵢ are the twiddle factors, R is the butterfly radix and yᵢ are the outputs. In practice, when fixed-point computations are associated, scaling, rounding or truncations are involved and the above formula may become: ${y}_{i} = {Q}_{2} \left\{{w}_{i}\left({Q}_{1}\left[α\left(R\right){\sum }_{m = 0}^{R - 1} {β}_{m} {x}_{m}\right]\right)\right\}$ In this formula, α(R) is a scale coefficient, which is a function of the radix, R, and Q1 and Q2 are the quantization (round/truncate) operations that cause the quantization noise.

The butterfly sub-stage begins at the sub-stage boundary as shown in 349. The inputs x₀ to x_{R-1} may be multiplied by the factors β_{0,0} to β_{R-1,0} respectively, and added to generate the first interim result. Similarly the second interim result may be generated by summing the multiplications of the inputs x₀ to x_{R-1}, by the factors β_{0,1} to β_{R-1,1} respectively. Similarly, as shown in 350, the (R-1)^{th} interim result may be the sum of x₀ to x_{R-1}, multiplied by the factors β_{0,R-1} to β_{R-1,R-1} respectively.

The sub-stage boundary as shown in 359 separates between the butterfly sub-stage and the Scale & Round sub-stage. The scaling and rounding α may be applied according to the radix of the m^{th} stage, Rₘ (0≤m<S), wherein S is the number of stages, as shown in 360, and may introduce the rounding or quantization noise v₀...v_{R-1} as shown in 365.

The sub-stage boundary as shown in 369 separates between the Scale & Round sub-stage and the Twiddle Factor sub-stage. The twiddle factor is applied by complex number multiplication as shown in 370.

The term "complex number multiplication" refers both to complete complex number multiplications, to implementations benefitting from constraints such as one of the arguments having a fixed absolute value, for example, a twiddle factor, and to simplified implementations wherein the rotation is by, for example, 90 degrees. Some implementations are based on the formula exp{-j*2*pi*k/N} wherein k is an index and N is the signal length. Some implementations may also use properties of angels such as 30 or 45 degrees to shorten calculations.

The stage may also introduce quantization noise due to the quantization following the multiplications with the twiddle factors w₀...w_{R-1} as shown in 375.

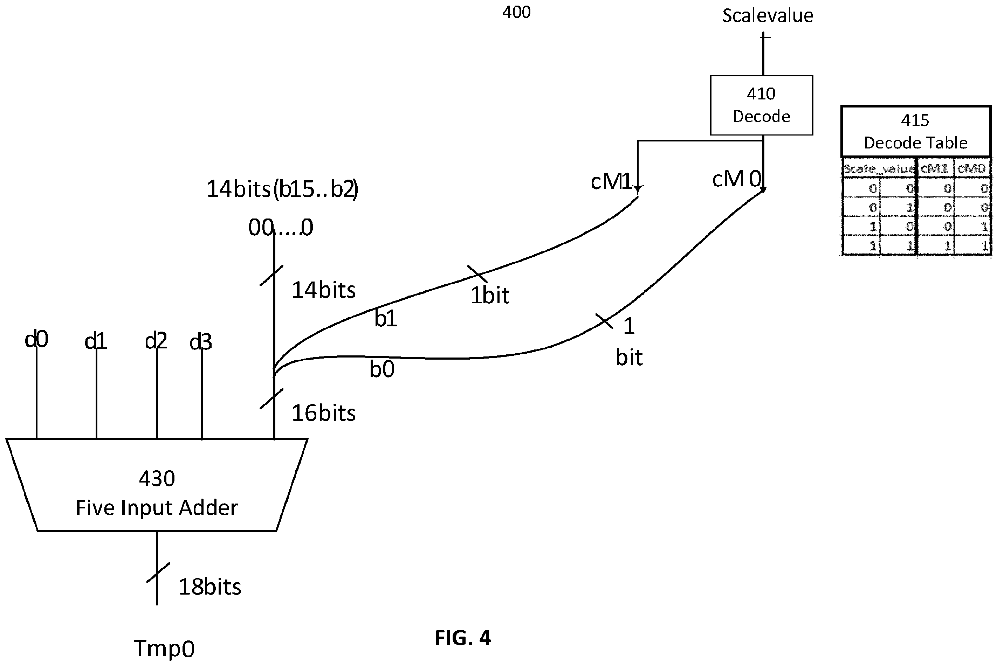

The sub-stage boundary as shown in 379 concludes the stage, outputting y₀...y_{R-1}. Reference is now made to FIG. 4, which is an exemplary diagram of an adder circuit adapted to some embodiments of the present disclosure.

Some hardware implementations are subject to constraints on the number of gates and logic complexity, and particularly on the longest cascade of gates, one or more bits pass through between random logic memory components such as flip-flops, latches, and the like. The latter constraints may be referred to as critical path constraints, as the slowest path, which may be the longest cascade of gates and/or wires, may determine the maximal clock frequency at which the device can be reliably operated. FIG. 4 depicts an exemplary design, as shown in 400 that may be used in devices implementing the disclosure.

The optional scale value (Scale _value), or right shift value can be any of the values: 0,1,2,3 when the radix is 4, and may be defined, by a separate logic, and based on additional, or collocated, stages and/or sub-stages that may be parallel, following, and/or preceding. In some implementations, the scale value is generated by logic separate from the butterfly computation and received as an input to the butterfly computation logic.

The scale value may be decoded as shown in 410, according to the decode table shown in 415, determining the signals cM0 and cM1. The signals cM1 and cM0 may be concatenated with zeros to form the fifth input to the five input adder shown in 430. This logic for butterfly calculation and round preparation requires a five input adder instead of a four input adder however, for example for a radix of 4, one of the inputs has only the two least significant bits (that can take the one of the three values 0,1,3 [in binary: 00, 01, 11]).

For smaller radices, for example radix-2, a smaller adder, such as three input adder, having two inputs and an additional single bit wide input may be used.

The concatenated input to the fifth input of the five input adder may be referred to as the "round value" - value "1" at one or both of the bit locations 0, or 1 depending on the scale value. The other inputs may be stored in four registers d0,d1,d2,d3, as the radix-4 butterfly comprises the addition/subtraction of four complex numbers, for which, and the result may be d0 + d1 + d2 + d3 wherein each "+" sign can represent either addition or subtraction.

The sum, or the output generated by the adder may be referred to as Tmp0. Note that Tmp0 may be defined by:
Tmp0 = [d0+d1+d2+d3 + (2^{(scale_value-1)} - 1)], ; for scale_value > 1
Tmp0 = [d0+d1+d2+d3], ; for scale _value = 0, 1
For example, if the scale_value = 3 than Tmp0 = d0+d1+d2+d3 + 3.

Recalling that the input samples dⱼ are also complex numbers, the multiplication of dⱼ by a complex number of modulus 1 can cause to growing of the real or imaginary components of x by up to √2 at the twiddle factor sub-stage. At the butterfly stage, the magnitude of the real or imaginary components of the input samples can grow by up to 2 bits (ceiling[log₂(4)]=2). For example, when the input samples dⱼ are 16 bit wide, than Tmp0 may be up to 18 bit wide. Similarly, when the input samples dⱼ are 32 bit wide, than Tmp0 may be 34 bit wide, and other bit widths including 48, 64, 128 and the likes may also be used. The five input adder, when dealing with signed numbers, the maximal positive representable value using 16 bit is 2¹⁵-1. The sum of four maximal 16 bit unsinged values is 4*2¹⁵-4. The maximal fifth input, for radix 4 is 3 ('11' in binary), thus the maximal Tmp0 value would be 4*2¹⁵-1 = 2¹⁷-1, which is the maximal positive number that can be represented by 18 bits.

It should be noted that the constraints on the fifth input may be applied to reduce the number of gates in the adder, and further optimization, variations, and like, may be performed manually or automatically, for example by circuit synthesis, and such variations should be construed as implementations of the disclosure.

A following shifter may discard "scale_value" bits (i.e. 3bits, or 2bits, or 1bit or none) and the output is the 16 least significant bits of the remaining bits

Since the value of the sum can be bigger than the values in the input registers, the scale-down operation (shift right) may take place along with the (unbiased) round.

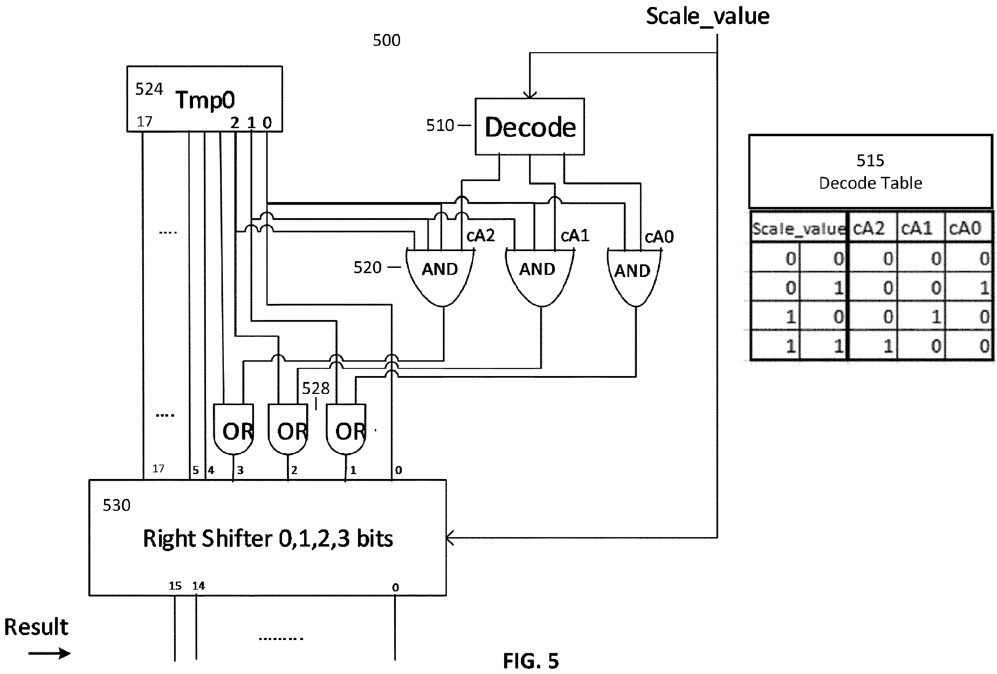

Reference is now made to FIG. 5, which is an exemplary diagram of a circuit for a reduced bias rounding of a number, according to some embodiments of the present disclosure.

The circuit 500 may be placed following the circuit 400 shown in FIG. 4, or receive the Scale _value signal, for example, directly from the logic calculating the number of bits to shift, and receive the signal Tmp0 generated by a hardware or a firmware alternative. In order to bring back the outputs to a range of 16 bits (as inputs to the next stage), it may be required to scale down the results of the current stage by up to 3 bits. This may done by shifting right of the butterfly output by up to 3 bits, before the multiplication by the wᵢ in the twiddle factor stage.

The additional steps of the butterfly operation may comprise completing the un-biased round operation, by calculating the result according to the following decision criteria:

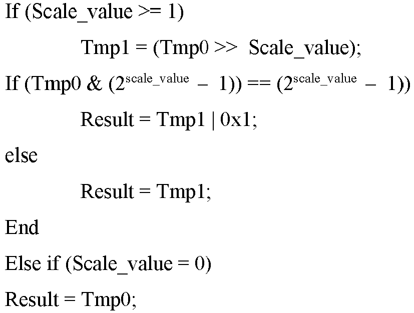

Note that '&' represent a bitwise and '|' represent a logical or. The input Tmp0, as shown in 524, may be calculated using an adapted adder circuit, for example the design 400 shown in FIG. 4. The scale value (Scale _value), or right shift value can be any of the values: 0,1,2,3 and may be defined, by a separate logic, and based on additional sub-stages, which may be used for parallel or different sub-stages. The scale value is calculated prior to the butterfly computation and received as an input parameter for the butterfly computation.

The scale value may be decoded as shown in 510, according to the decode table shown in 515, determining the signals cA0, cA1 and cA2. The signals cA0, cA1 and cA2 may be used as the inputs of the AND gates shown in 520. The AND gates shown in 520 receive the least significant bits of Tmp0, the rightmost receives the least significant bits, the middle receives the two least significant bits, and the leftmost receives the three least significant bits.

The Output of the AND gates is received by the OR gates, as shown in 528. The OR gates further receive bits from Tmp0, the rightmost receives the second least significant bit, the middle receives the third least significant bit, and the leftmost receives the fourth least significant bit.

The right shifter, as shown in 530, may support a 0,1,2, or 3 bits shift. The least significant bit of the input is the least significant bit of Tmp0, the second, third, and forth least significant bit are received form the OR gates, and the rest of the bits are also received from Tmp0.

Note that the simplicity and even distribution of the added logic between the less significant bits enable lesser encumbrance on constraints such as timing, area, power, and the like.

The result may be produced for the following sub-stage, or stage. For example, the integer rounding may followed by a twiddle operation, which may be implemented using a multiplier, in some DIF implementations. Alternatively, the integer rounding may be implemented as a processor instruction, and firmware may provide the inputs and process the output.

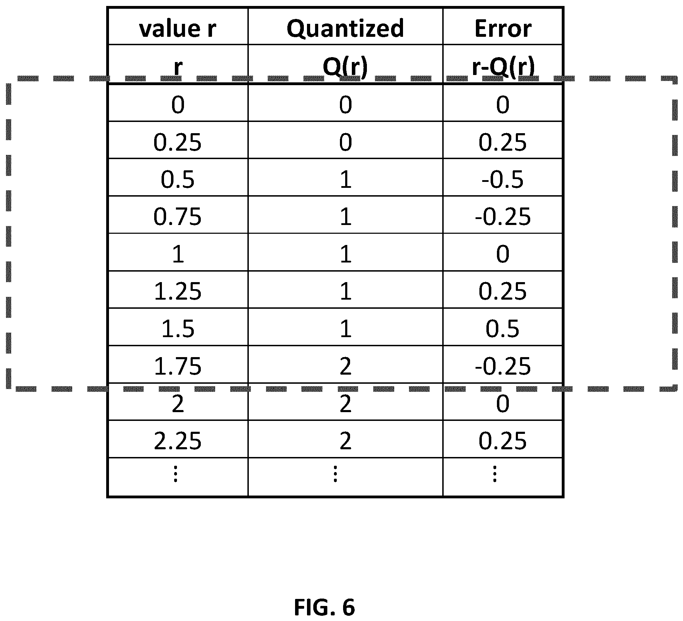

Reference is now made to FIG. 6, which is a table of a reduced bias rounding of a number, according to some embodiments of the present disclosure.

The table exemplifies an unbiased two-bit scaling and rounding of a number. Note that both 0.5 and 1.5 are rounded to 1. This rounding may be referred to as rounding to the nearest odd number, as for example, 12.5 would be rounded to 13. An obvious alternative may be rounding to the nearest even number. Further alternatives may round up or down numbers according to other bits, and some alternatives may consider the distribution of the signal and compensate for uneven distribution of the signal by an asymmetrical rounding rule.

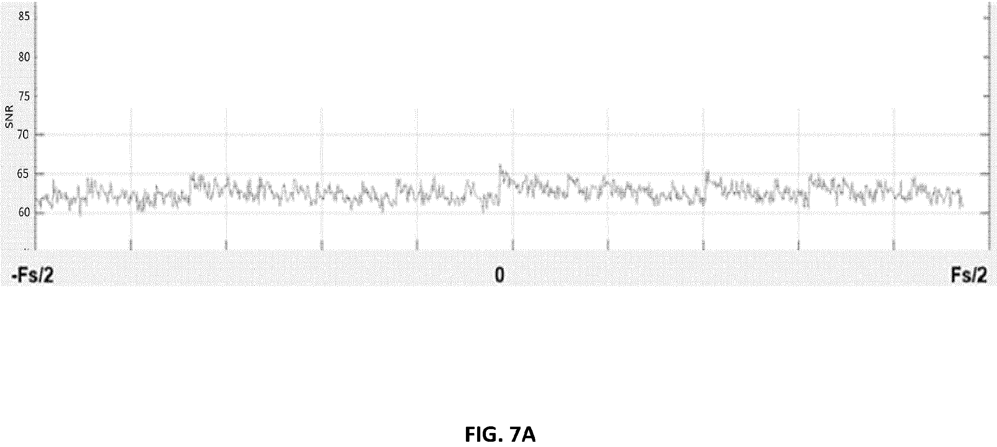

Reference is now made to FIG. 7A, which depicts results of simulations of the signal to noise ratio spectrogram, according to some embodiments of the present disclosure.

As shown in FIG. 7A, a graph depicts the signal to quantization noise ratio (SQNR), or by the more general term, the signal to noise ratio (SNR) spectrum using an implementation of the present disclosure. It can be seen that throughout the spectrum -Fs/2 to Fs/2 the SNR substantially ranges from 60dB to 65dB.

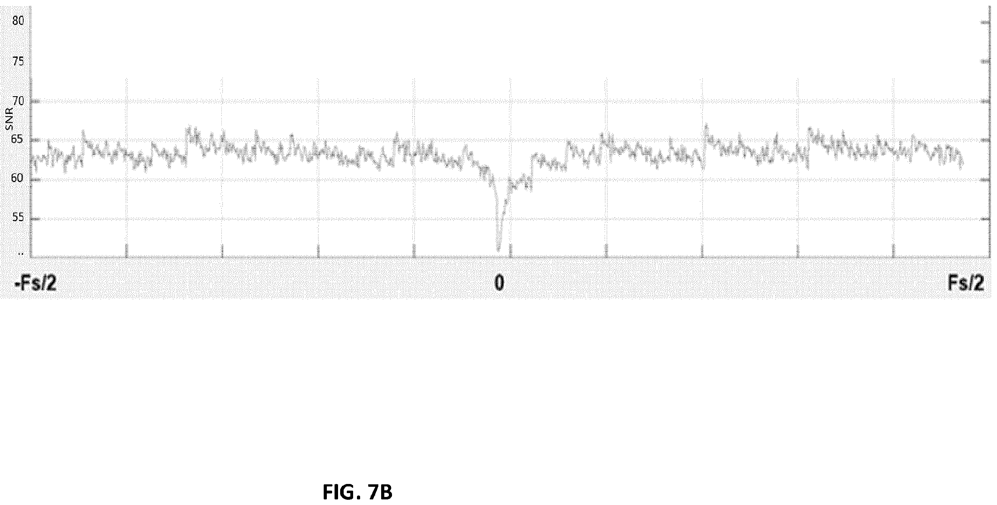

Reference is also made to FIG. 7B, which depicts results of simulations of the signal to noise ratio spectrogram, according to some embodiments of the prior art.

As shown in FIG. 7B, a graph depicts the signal to quantization noise ratio (SQNR) spectrum using the original HW-friendly round. It can be seen that throughout most of the spectrum -Fs/2 to Fs/2 the SNR substantially ranges from 60dB to 65dB, however there is non-white noise around the 0 frequency, which may be also referred to as DC or alternatively as bias, visible as a dip in the SNR reaching roughly 50dB.

The descriptions of the various embodiments have been presented for purposes of illustration, but are not intended to be exhaustive or limited to the embodiments disclosed. Many modifications and variations will be apparent to those of ordinary skill in the art without departing from the scope of the described embodiments. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant hardware implementations will be developed and the scope of the term device is intended to include all such new technologies a priori.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment may include a plurality of "optional" features unless such features conflict.

Throughout this application, various embodiments may be presented in a range format. It should be understood that the description in range format is merely for convenience and brevity and should not be construed as an inflexible limitation on the scope of embodiments. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of embodiments, which are, for clarity, described in the context of separate embodiments, may also be provided in combination in a single embodiment. Conversely, various features of embodiments, which are, for brevity, described in the context of a single embodiment, may also be provided separately or in any suitable subcombination or as suitable in any other described embodiment. Certain features described in the context of various embodiments are not to be considered essential features of those embodiments, unless the embodiment is inoperative without those elements.

Although embodiments have been described in conjunction with specific embodiments thereof, it is evident that many alternatives, modifications and variations will be apparent to those skilled in the art. Accordingly, it is intended to embrace all such alternatives, modifications and variations that fall within the scope of the appended claims.

## Claims

1. A device, comprising:
a processing unit (108) adapted for performing a fast Fourier transform of a signal by:
during an addition sub-stage calculating a butterfly operator result by applying at least one butterfly operator on a portion of the signal; and
when it is indicated (204) that at least one result of a collocated sub-stage may exceed a following sub-stage input word length, execute (210) an integer scaling and rounding by:
determining (220) a group of bits to truncate by at least one bit of at least one of the numbers at the collocated sub-stage input;
setting (221) a flag, based on one additional bit;
when a most significant bit of the group of bits is one and either the flag or at least one other bits of the group of bits is one, rounding up (227) the butterfly operator result; and
when either the most significant bit of the group of bits is zero or the flag and the other bits of the group of bits are zero, rounding down (226) the butterfly operator result;
**characterized in that** the device further comprises either:
a five input adder, having four inputs and an additional two-bit-wide input, wherein the value of the additional two-bit-wide input is determined by the size of the group of bits to truncate, wherein the value of the additional two-bit-wide input is one when the group of bits to truncate contains two bits, the value is three when the group of bits to truncate contains three bits, and the value is zero otherwise; or
a three input adder, having two inputs and an additional one-bit-wide input, wherein the value of the additional one-bit-wide input is determined by the size of the group of bits to truncate, wherein the value of the additional one-bit-wide input is one when the group of bits to truncate contains two bits, and the value is zero otherwise.

2. The device of claim 1, wherein the one additional bit is a single predetermined bit which is the least significant bit not being truncated.

3. The device of claim 1, wherein the one additional bit is a single predetermined bit which is the least significant bit beside the group of bits.

4. The device of claim 1, wherein the at least one bit comprises the most significant bit.

5. The device of claim 1, wherein the integer scaling and rounding is implemented as a processor instruction.

6. A method for performing a fast Fourier transform of a signal by:
during an addition sub-stage calculating a butterfly operator result by applying (201) at least one butterfly operator on a portion of the signal; and
when it is indicated (204) that at least one result of a collocated sub-stage may exceed a following sub-stage input word length, execute (210) an integer scaling and rounding by:
determining (220) a group of bits to truncate by at least one bit of at least one of the numbers at the collocated sub-stage input;
setting (221) a flag, based on one additional bit;
when a most significant bit of the group of bits is one and either the flag or at least one other bits of the group of bits is one, rounding up (227) the butterfly operator result; and
when either the most significant bit of the group of bits is zero or the flag and the other bits of the group of bits are zero, rounding down (226) the butterfly operator result;
**characterized in that** the method further comprises either:
a five input adder, having four inputs and an additional two-bit-wide input, wherein the value of the additional two-bit-wide input is one when the group of bits to truncate contains two bits, the value is three when the group of bits to truncate contains three bits, and the value is zero otherwise; or
a three input adder, having two inputs and an additional one-bit-wide input, wherein the value of the additional one-bit-wide input is one when the group of bits to truncate contains two bits, and the value is zero otherwise.

7. The method of claim 6, wherein the one additional bit is a single predetermined bit which is the least significant bit not being truncated.

8. The method of claim 6, wherein the one additional bit is a single predetermined bit which is the least significant bit beside the group of bits.

9. The method of claim 6, wherein the at least one bit comprises the most significant bit.

10. The method of claim 6, wherein the logic for rounding a number is implemented as a processor instruction.

11. The method of any one of claims 6 to 10, further adapted for decimation in frequency based fast Fourier transform.

## Patentansprüche

1. Vorrichtung, die umfasst:
eine Verarbeitungseinheit (108), die ausgelegt ist, um eine schnelle Fourier-Transformation eines Signals durchzuführen durch:
während einer Additions-Unterstufe, Berechnen eines Butterfly-Operator-Ergebnisses durch Anwenden mindestens eines Butterfly-Operators auf einen Abschnitt des Signals; und
wenn angezeigt wird (204), dass mindestens ein Ergebnis einer kollozierten Unterstufe eine folgende Unterstufen-Eingangswortlänge überschreiten kann, Ausführen (210) einer ganzzahligen Skalierung und Rundung durch:
Bestimmen (220) einer Gruppe von Bits, die um mindestens ein Bit von mindestens einer der Zahlen an dem kollozierten Unterstufen-Eingang zu verkürzen ist;
Setzen (221) eines Flags, basierend auf einem zusätzlichen Bit;
wenn ein höchstwertiges Bit der Bitgruppe eins ist und entweder das Flag oder mindestens ein anderes Bit der Bitgruppe eins ist, Aufrunden (227) des Butterfly-Operator-Ergebnisses; und
wenn entweder das höchstwertige Bit der Bitgruppe null ist oder das Flag und die anderen Bits der Bitgruppe null sind, Abrunden (226) des Butterfly-Operator-Ergebnisses;
**dadurch gekennzeichnet, dass** die Vorrichtung ferner entweder umfasst:
einen Fünf-Eingänge-Addierer, der vier Eingänge und einen zusätzlichen zwei-Bit-breiten Eingang aufweist, wobei der Wert des zusätzlichen zwei-Bit-breiten Eingangs durch die Größe der Gruppe von Bits, die zu verkürzen sind, bestimmt wird, wobei der Wert des zusätzlichen zwei-Bit-breiten Eingangs eins ist, wenn die Gruppe von Bits, die zu verkürzen sind, zwei Bits enthält, der Wert drei ist, wenn die Gruppe von Bits, die zu verkürzen sind, drei Bits enthält, und der Wert andernfalls null ist; oder
einen Drei-Eingänge-Addierer, der zwei Eingänge und einen zusätzlichen ein-Bit-breiten Eingang aufweist, wobei der Wert des zusätzlichen ein-Bit-breiten Eingangs durch die Größe der Gruppe von Bits, die zu verkürzen sind, bestimmt wird, wobei der Wert des zusätzlichen ein-Bit-breiten Eingangs eins ist, wenn die Gruppe von Bits, die zu verkürzen sind, zwei Bits enthält, und der Wert andernfalls null ist.

2. Vorrichtung nach Anspruch 1, wobei das eine zusätzliche Bit ein einzelnes vorbestimmtes Bit ist, das das niedrigstwertige Bit ist, das nicht verkürzt wird.

3. Vorrichtung nach Anspruch 1, wobei das eine zusätzliche Bit ein einzelnes vorbestimmtes Bit ist, das das niedrigstwertige Bit neben der Gruppe von Bits ist.

4. Vorrichtung nach Anspruch 1, wobei das mindestens eine Bit das höchstwertige Bit umfasst.

5. Vorrichtung nach Anspruch 1, wobei die ganzzahlige Skalierung und Rundung als eine Prozessoranweisung implementiert ist.

6. Verfahren zum Durchführen einer schnellen Fourier-Transformation eines Signals durch:
während einer Additions-Unterstufe, Berechnen eines Butterfly-Operator-Ergebnisses durch Anwenden (201) mindestens eines Butterfly-Operators auf einen Abschnitt des Signals; und
wenn angezeigt wird (204), dass mindestens ein Ergebnis einer kollozierten Unterstufe eine folgende Unterstufen-Eingangswortlänge überschreiten kann, Ausführen (210) einer ganzzahligen Skalierung und Rundung durch:
Bestimmen (220) einer Gruppe von Bits, die um mindestens ein Bit von mindestens einer der Zahlen an dem kollozierten Unterstufen-Eingang zu verkürzen ist;
Setzen (221) eines Flags, basierend auf einem zusätzlichen Bit;
wenn ein höchstwertiges Bit der Bitgruppe eins ist und entweder das Flag oder mindestens ein anderes Bit der Bitgruppe eins ist, Aufrunden (227) des Butterfly-Operator-Ergebnisses; und
wenn entweder das höchstwertige Bit der Bitgruppe null ist oder das Flag und die anderen Bits der Bitgruppe null sind, Abrunden (226) des Butterfly-Operator-Ergebnisses;
**dadurch gekennzeichnet, dass** das Verfahren ferner entweder umfasst:
einen Fünf-Eingänge-Addierer, der vier Eingänge und einen zusätzlichen zwei-Bit-breiten Eingang aufweist, wobei der Wert des zusätzlichen zwei-Bit-breiten Eingangs eins ist,
wenn die Gruppe von Bits, die zu verkürzen sind, zwei Bits enthält, der Wert drei ist, wenn die Gruppe von Bits, die zu verkürzen sind, drei Bits enthält, und der Wert andernfalls null ist; oder
einen Drei-Eingänge-Addierer, der zwei Eingänge und einen zusätzlichen ein-Bit-breiten Eingang aufweist, wobei der Wert des zusätzlichen ein-Bit-breiten Eingangs eins ist, wenn die Gruppe von Bits, die zu verkürzen sind, zwei Bits enthält, und der Wert andernfalls null ist.

7. Verfahren nach Anspruch 6, wobei das eine zusätzliche Bit ein einzelnes vorbestimmtes Bit ist, das das niedrigstwertige Bit ist, das nicht verkürzt wird.

8. Verfahren nach Anspruch 6, wobei das eine zusätzliche Bit ein einzelnes vorbestimmtes Bit ist, das das niedrigstwertige Bit neben der Gruppe von Bits ist.

9. Verfahren nach Anspruch 6, wobei das mindestens eine Bit das höchstwertige Bit umfasst.

10. Verfahren nach Anspruch 6, wobei die Logik für die Rundung einer Zahl als eine Prozessoranweisung implementiert ist.

11. Verfahren nach einem der Ansprüche 6 bis 10, ferner angepasst für eine auf Dezimierung in der Frequenz basierende schnelle Fourier-Transformation.

## Revendications

1. Dispositif, comprenant :
une unité de traitement (108) conçue pour effectuer une transformée de Fourier rapide d'un signal par :
pendant une sous-étape d'addition, le calcul d'un résultat d'opérateur papillon en appliquant au moins un opérateur papillon sur une partie du signal ; et
lorsqu'il est indiqué (204) qu'au moins un résultat d'une sous-étape colocalisée peut dépasser une longueur de mot d'entrée de sous-étape suivante, l'exécution (210) d'une mise à l'échelle et d'un arrondi de nombres entiers par :
la détermination (220) d'un groupe de bits à tronquer par au moins un bit d'au moins l'un des nombres au niveau de l'entrée de sous-étape colocalisée ;
le réglage (221) d'un indicateur, sur la base d'un bit supplémentaire ;
lorsqu'un bit le plus significatif du groupe de bits est égal à un et que soit l'indicateur, soit au moins un autre bit du groupe de bits est égal à un, l'arrondi par excès (227) du résultat d'opérateur papillon ; et
lorsque soit le bit le plus significatif du groupe de bits est égal à zéro, soit l'indicateur et les autres bits du groupe de bits sont égaux à zéro, l'arrondi par défaut (226) du résultat d'opérateur papillon ;
**caractérisé en ce que** le dispositif comprend en outre soit :
un additionneur à cinq entrées, ayant quatre entrées et une entrée supplémentaire large de deux bits, dans lequel la valeur de l'entrée supplémentaire large de deux bits est déterminée par la taille du groupe de bits à tronquer, dans lequel la valeur de l'entrée supplémentaire large de deux bits à tronquer est égale à un lorsque le groupe de bits à tronquer contient deux bits, la valeur est égale à trois lorsque le groupe de bits à tronquer contient trois bits, et la valeur est égale à zéro dans le cas contraire ; ou
un additionneur à trois entrées, ayant deux entrées et une entrée supplémentaire large d'un bit, dans lequel la valeur de l'entrée supplémentaire large d'un bit est déterminée par la taille du groupe de bits à tronquer, dans lequel la valeur de l'entrée supplémentaire large d'un bit est égale à un lorsque le groupe de bits à tronquer contient deux bits, et la valeur est égale à zéro dans le cas contraire.

2. Dispositif selon la revendication 1, dans lequel le bit supplémentaire est un bit prédéterminé unique qui est le bit le moins significatif n'étant pas tronqué.

3. Dispositif selon la revendication 1, dans lequel le bit supplémentaire est un bit prédéterminé unique qui est le bit le moins significatif à côté du groupe de bits.

4. Dispositif selon la revendication 1, dans lequel l'au moins un bit comprend le bit le plus significatif.

5. Dispositif selon la revendication 1, dans lequel la mise à l'échelle et l'arrondi de nombres entiers sont mis en œuvre en tant qu'instruction de processeur.

6. Procédé permettant d'effectuer une transformée de Fourier rapide d'un signal par :
pendant une sous-étape d'addition, le calcul d'un résultat d'opérateur papillon en appliquant (201) au moins un opérateur papillon sur une partie du signal ; et
lorsqu'il est indiqué (204) qu'au moins un résultat d'une sous-étape colocalisée peut dépasser une longueur de mot d'entrée de sous-étape suivante, l'exécution (210) d'une mise à l'échelle et d'un arrondi de nombres entiers par :
la détermination (220) d'un groupe de bits à tronquer par au moins un bit d'au moins l'un des nombres au niveau de l'entrée de sous-étape colocalisée ;
le réglage (221) d'un indicateur, sur la base d'un bit supplémentaire ;
lorsqu'un bit le plus significatif du groupe de bits est égal à un et que soit l'indicateur, soit au moins un autre bit du groupe de bits est égal à un, l'arrondi par excès (227) du résultat d'opérateur papillon ; et
lorsque soit le bit le plus significatif du groupe de bits est égal à zéro, soit l'indicateur et les autres bits du groupe de bits sont égaux à zéro, l'arrondi par défaut (226) du résultat d'opérateur papillon ;
**caractérisé en ce que** le procédé comprend en outre soit :
un additionneur à cinq entrées, ayant quatre entrées et une entrée supplémentaire large de deux bits, dans lequel la valeur de l'entrée supplémentaire large de deux bits est égale à un lorsque le groupe de bits à tronquer contient deux bits, la valeur est égale à trois lorsque le groupe de bits à tronquer contient trois bits, et la valeur est égale à zéro dans le cas contraire ; ou
un additionneur à trois entrées, ayant deux entrées et une entrée supplémentaire large d'un bit, dans lequel la valeur de l'entrée supplémentaire large d'un bit est égale à un lorsque le groupe de bits à tronquer contient deux bits, et la valeur est égale à zéro dans le cas contraire.

7. Procédé selon la revendication 6, dans lequel le bit supplémentaire est un bit prédéterminé unique qui est le bit le moins significatif n'étant pas tronqué.

8. Procédé selon la revendication 6, dans lequel le bit supplémentaire est un bit prédéterminé unique qui est le bit le moins significatif à côté du groupe de bits.

9. Procédé selon la revendication 6, dans lequel l'au moins un bit comprend le bit le plus significatif.

10. Procédé selon la revendication 6, dans lequel la logique permettant d'arrondir un nombre est mise en œuvre en tant qu'instruction de processeur.

11. Procédé selon l'une quelconque des revendications 6 à 10, conçu en outre pour la décimation dans une transformée de Fourier rapide basée sur la fréquence.
